# EUROPÄISCHE PATENTANMELDUNG

(11) **EP 4 039 088 A1**
(43) Veröffentlichungstag der Anmeldung: **10.08.2022**
(21) Anmeldenummer: 21155068.6
(22) Anmeldetag: 03.02.2021
(51) Int. Cl.: A01K 85/00

(54) **ANGELHAKEN MIT GEWICHTSELEMENT UND VERFAHREN ZUR HERSTELLUNG EINES SOLCHEN**

(71) Anmelder: JMC Otto GbR, 35080 Bad Endbach (DE)
(72) Erfinder: OTTO, Johannes, 35080 Bad Endbach (DE); OTTO, Michael, 35080 Bad Endbach (DE); OTTO, Christoph, 35649 Bischoffen (DE)
(74) Vertreter: Patentanwälte Olbricht Buchhold Keulertz

(57) **Zusammenfassung**

Die Erfindung betrifft einen Angelhaken (1) mit einem gebogenen Hakenelement (10), das an einem ersten Ende (E1) eine Spitze (11) und im Bereich des zweiten Endes (E2) einen Hakenkopf (12) aufweist, und mit einem Gewichtselement (30), das aus einem Metallkörper (31) mit einem Schlitz (32) ausgebildet ist, wobei das gebogenen Hakenelement (10) mit einem Halteabschnitt (13) in dem Schlitz (32) angeordnet und klemmend gehalten ist. Außerdem betrifft die Erfindung ein Verfahren zur Herstellung eines solchen Angelhakens.

## Beschreibung

Die Erfindung betrifft einen Angelhaken mit einem Gewichtselement gemäß dem Oberbegriff von Anspruch 1 und ein Verfahren zur Herstellung eines solchen Angelhakens nach Anspruch 13.

Angelhaken werden zum Fischen am Ende einer Schnur befestigt und dienen nach dem Anbiss durch einen Fisch zu dessen Sicherung an der Schnur bis zur Anlandung. Für den Anbiss werden am Angelhaken Naturköder, wie Fische oder Würmer, oder künstliche Köder, insbesondere aus Gummi aufgeschoben, aufgefädelt oder aufgespießt. Um den Angelhaken und einen etwaigen Köder in einer Wunschposition im Wasser zu halten und auszurichten werden solche Angelhaken mit einem Gewicht ausgestattet.

Beispielsweise ist bekannt, einen Angelhaken mit Blei zu beschweren. In DE 295 17 388 U1 wird in der Einleitung als Ballastgewicht ein Stahlrohr beschrieben, das mit Bleischrot oder anderen Materialien gefüllt ist.

Diese Ballastgewichte gehen beim Angeln gelegentlich verloren, dies entweder durch Lösen vom Angelhaken oder durch Verlust des gesamten Angelhakens inklusive dem Ballastgewicht. Bei einem Einsatz des Schwermetalls Blei entsteht ein Bleieintrag in die Gewässer, der aus Umweltgesichtspunkten unerwünscht ist.

Ballastgewichte müssen bei kleinem Volumen relativ schwer sein, um ihre Beschwerungsfunktion für Fische unauffällig zu erfüllen. Deswegen konnten bislang keine nennenswerten Alternativen zu Ballastgewichten aus Blei (Dichte circa 11,342 g/cm³) aufgezeigt werden.

In DE 10 2017 107 611 A1 wird statt Blei ein Keramikkörper eingesetzt. Ein solches hat aber ein geringes Volumengewicht, das nur teilweise durch den beschriebenen Einsatz von Werkstoffen wie Aluminiumoxid und Zirkonoxid erhöht sein kann. So werden auch von
DE 10 2017 107 611 A1 nur Dichten in Höhe von 3 g/cm³ bis 5 g/cm³ angegeben. Daraus ergibt sich ein 2,5-fach größeres Ballastgewichtvolumen im Vergleich mit Blei. Ein weiterer Nachteil ist von Keramik ist die schwierige Montage an dem gebogenen Hakenelement, die gemäß
DE 10 2017 107 611 A1 bspw. durch Kleben erfolgt. Schließlich brechen die Keramiken, wenn der Haken auf harte Gegenstände trifft, bspw. auf den Boden, eine Mole oder dergleichen.

Aufgabe der Erfindung ist es daher, einen ökologisch unbedenklichen Angelhaken mit Gewichtselement und ein Verfahren zur Herstellung eines solchen bereitzustellen, wobei der Angelhaken einfach und kostengünstig herstellbar ist, widerstandsfähig, robust und dauerhaft mit dem Hakenelement verbunden ist, und ein kleines Bauteilvolumen bei hohem Gewicht aufweist.

Hauptmerkmale der Erfindung sind im kennzeichnenden Teil von Anspruch 1 sowie in Anspruch 13 angegeben. Ausgestaltungen sind Gegenstand der Ansprüche 2 bis 12 und 14 bis 15.

Die Erfindung betrifft einen Angelhaken mit einem gebogenen Hakenelement, das an einem ersten Ende eine Spitze und im Bereich des zweiten Endes einen Hakenkopf aufweist, und mit einem Gewichtselement, das aus einem Metallkörper mit einem Schlitz ausgebildet ist, wobei das gebogenen Hakenelement mit einem Halteabschnitt in dem Schlitz angeordnet und klemmend gehalten ist.

Vorteilhaft hieran ist, dass der Angelhaken einfach und kostengünstig herstellbar ist, wobei das Gewichtselement ohne umweltschädliche Zusatzstoffe wie Klebstoffe widerstandsfähig, robust und dauerhaft mit dem Hakenelement verbunden ist. Das gebogene Hakenelement besteht vorzugsweise aus Eisen oder Stahl.

Gemäß einer speziellen Ausgestaltung ist der Angelhaken zweiteilig ausgeführt, und besteht aus dem gebogenen Hakenelement und dem Metallkörper. Die geringe Anzahl an Bauteilen führt zu einem einfachen Aufbau und geringen Herstellkosten.

Optional besteht die Ausgestaltungsmöglichkeit, dass der Metallkörper einen einteilig aus- bzw. angeformten Widerhaken aufweist, insbesondere einen Köderhalter zur Fixierung eines auf das Hakenelement aufgeschobenen Naturköders oder künstlichen Köders. Alternativ oder ergänzend kann ein separater Widerhaken am gebogenen Hakenelement festgelegt sein, vorzugsweise angeklebt oder aufgeklemmt sein, insbesondere einen als Köderhalter ausgebildeten Widerhaken zur Fixierung eines auf das Hakenelement aufgeschobenen Naturköders oder künstlichen Köders. Auch ein separater Widerhaken sollte aus einem Metall bestehen, insbesondere aus der Gruppe Eisen, Stahl, Edelstahl, Messing oder Kupfer.

Weiterhin ist es zu bevorzugen, dass das gebogene Hakenelement einteilig ausgebildet ist. Auch dies reduziert die Anzahl an Bauteilen.

In einer besonderen Ausführungsform weist das gebogene Hakenelement im Bereich des Schlitzes einen Knick auf. Hierdurch wird der Angelhaken aufgrund der Gewichtsverteilung im Wasser tendenziell in die waagerechte Lage gezwungen. Vorteilhaft ist insbesondere, dass der aufgeklemmte Metallkörper nicht in einer Richtung verrutschen kann, sondern in zwei Richtungen formschlüssig gehalten ist. Der Knick sollte also im Schlitz angeordnet sein. Bevorzugt liegen durch den Knick das erste und zweite Ende des gebogenen Hakenelementes auf der gleichen Seite bezogen auf einen dazwischenliegenden Abschnitt.

Im Speziellen können zwei an den Halteabschnitt angrenzende Abschnitte des gebogenen Hakenelements rechtwinklig zueinander ausgerichtet sein. Damit steht der Angelhaken mit seinem Hakenschenkel zumindest im Wesentlichen senkrecht zur geodätisch senkrecht hängenden Angelschnur, also horizontal.

Vorzugsweise weist der Angelhaken außerdem eines oder mehrere Merkmale der folgenden Gruppe auf:
- das gebogene Hakenelement weist im Bereich des ersten Endes einen Widerhaken aufweist.
- der Widerhaken ist einteilig an dem gebogenen Hakenelement angeformt;
- der Hakenkopf ist eine Befestigungsöse; die insbesondere einteilig mit dem Hakenelement ausgebildet ist;
- die Befestigungsöse ist durch ein Umbiegen des ersten Endes des gebogenen Hakenelements ausgebildet;
- der Hakenkopf ist außerhalb des Schlitzes angeordnet;
- das gebogene Hakenelement bildet einen an den Hakenkopf anschließenden Hakenschenkel aus;
- der Halteabschnitt ist ein Abschnitt des Hakenschenkels;
- der Halteabschnitt ist im Bereich des zweiten Endes angeordnet;
- das gebogene Hakenelement bildet zwischen dem Hakenschenkel und der Spitze einen Hakenbogen aus.

Es resultiert jeweils ein auf den Fischfang optimierter Angelhaken, der mit dem erfindungsgemäßen Gewichtselement harmoniert.

Optional kann der Schlitz linear ausgebildet sein. Dies ist besonders einfach in der Herstellung, nämlich beispielsweise durch einbringen eines Schnittes in Vollmaterial, oder durch Erzeugen einer Falte oder Knicks durch Umbiegen bzw. Umformen von Rohmaterial.

Für eine stabile Fixierung ist es besonders zu bevorzugen, dass der Schlitz durch Verformung des Metallkörpers so verformt ist, dass der Metallkörper auf das gebogene Hakenelement aufgeklemmt ist. Insbesondere sollte die Schlitzöffnung durch die Umformung schmäler sein als der Durchmesser des Halteabschnitts beträgt.

Es ist besonders bevorzugt, wenn der Schlitz durch Verformung des Metallkörpers so verformt ist, dass sich gegenüberliege Wandungen des Schlitzes wenigstens in einem Bereich kontaktieren und der Halteabschnitt hierdurch (insbesondere um 360 Grad) umfasst ist. Damit ist der Metallkörper sicher auf dem gebogenen Hakenelement festgelegt.

In einer Ausführungsvariante ist das gebogenen Hakenelement durch Verformung des Metallkörpers im Bereich des Halteabschnitts flachgedrückt, dies vorzugsweise so, dass zwischen dem Metallkörper und dem gebogenen Hakenelement eine Rutschsicherung ausgebildet ist. Das Gewichtselement kann hierdurch weniger leicht auf dem gebogenen Hakenelement verrutschen oder sich um dieses drehen.

In einer Variante des Angelhakens ist der Metallkörper kugelförmig ausgebildet. Kugeln haben eine hohe Masse bei geringer Oberfläche. Außerdem sind Kugeln als vorgefertigte Halbzeuge bereitstellbar und eignen sich gut für automatisierte Werkzeugzuführungen, was kostengünstig bei kleinen und mittelgroßen Serien ist. Alternativ ist der Metallkörper in der Form eines Erie-Jig-Kopfs ausgebildet. Diese Erie-Jig-Kopfform ähnelt einem aus einem Rundkörper herausgelöstem Keil. Diese Erie-Jigköpfe dienen der schräg nach oben gerichteten Ausrichtung des Hakenelements, während der Erie-Jigköpfe ähnlich einem Schaukelstuhl auf Grund liegt. Weitere alternative Formen für den Metallkörper stellen Eiformen und Footballformen (ähnlich einem verlängerten Rotationsellipsoid mit spitzen Enden) dar. Mit diesen lassen sich recht große Gewichte bei gegenüber der Kugelform schlanker Bauform erzielen. Eine weitere optionale Spezialform des Metallkörpers kann eine Fischkopfform sein. Diese Form dient als Ergänzung eines Fischkopfs an einem aufgeschobenen Kunstköderkörper.

Gemäß einer Herstellvariante ist der Metallkörper durch ein Folgeverbundverfahren um den Halteabschnitt geformt. Dies ist besonders kostengünstig bei der Massenfertigung.

Bevorzugt besteht der Metallkörper aus Eisen, Stahl, Edelstahl, Messing oder Kupfer. Diese Materialien sind auch bei einem Verlust des Angelhakens in einem Gewässer biologisch unbedenklich und preiswert. Dennoch haben sie einer vergleichsweise hohe Dichte, nämlich Stahl von 7,85-7,87 g/cm³ und Eisen von 7,87 g/cm³. Mit Kupfer lässt sich sogar eine Dichte von 8,92 g/cm³ und mit Messing von 8,86 g/cm³ erzielen. Das Aufklemmen des Metallkörpers in Kombination mit den angegebenen Materialien ist von besonderem Vorteil, weil dies bei Temperaturen weit unter dem Schmelzpunkt des gebogenen Hakenelements gelingt. Gewichte aus Blei lassen sich dem gegenüber beispielsweise angießen, sind jedoch ökologisch bedenklich.

Die Erfindung betrifft außerdem ein Verfahren zur Herstellung eines Angelhakens, das die folgenden Schritte umfasst:
a) Bereitstellen eines gebogenen Hakenelements, das an einem ersten Ende eine Spitze und im Bereich des zweiten Endes einen Hakenkopf aufweist;
b) Bereitstellen eines Gewichtselements, das aus einem Metallkörper ausgebildet ist;
c) Umformen des Metallkörpers derart, dass das gebogenen Hakenelement mit einem Halteabschnitt so in einem Schlitz des Metallkörpers sitzt, dass das Gewichtselement klemmend auf dem Halteabschnitt des gebogenen Hakenelements gehalten ist.

Vorteilhaft hieran ist, dass in einem einfachen Arbeitsablauf ein Gewichtselement an einem Hakenelement festlegbar ist.

In einer optionalen Verfahrensausgestaltung ist vorgesehen, dass das Bereitstellen des Gewichtselements gemäß Schritt b), durch einen Metallkörper mit einem Schlitz erfolgt, und das gebogene Hakenelement mit einem Halteabschnitt in dem Schlitz angeordnet wird. Indem zuerst der Schlitz bereitsteht, wirken bei der Umformung des Metallkörpers geringere Kräfte auf das gebogene Hakenelement als beispielsweise bei einem unmittelbaren Herumformen des Metallkörpers um das gebogene Hakenelement.

Bei einer optionalen Verfahrensführung wird das Gewichtselement gemäß Schritt b), vorzugsweise inklusive dem Schlitz, durch ein Fließpressverfahren aus einem gewickelten Rohmaterial bereitgestellt und Schritt c) erfolgt anschließend durch ein Folgeverbundverfahren. Hierdurch lässt sich eine preiswerte Massenproduktion realisieren.

Optional kann das Gewichtelement vor Schritt c) vorgewärmt werden. Damit lässt sich die Verformbarkeit für den Schritt c) steigern. Dabei kann die Vorwärmung unmittelbares Ergebnis der Herstellung des Gewichtselements in einem vorausgehenden Arbeitsschritt sein, beispielsweise des Fließpressens. Dann ist es verfahrenstechnisch günstig, wenn die Herstellung des Gewichtselements und das Umformen nach Schritt c) unmittelbar aufeinander folgen, also insbesondere ohne erkalten des Gewichtselements nach dessen Herstellung.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine erste perspektivische Ansicht eines Angelhakens;
- Fig. 2: eine zweite perspektivische Ansicht eines Angelhakens; und
- Fig. 3: eine dritte perspektivische Ansicht eines Angelhakens.

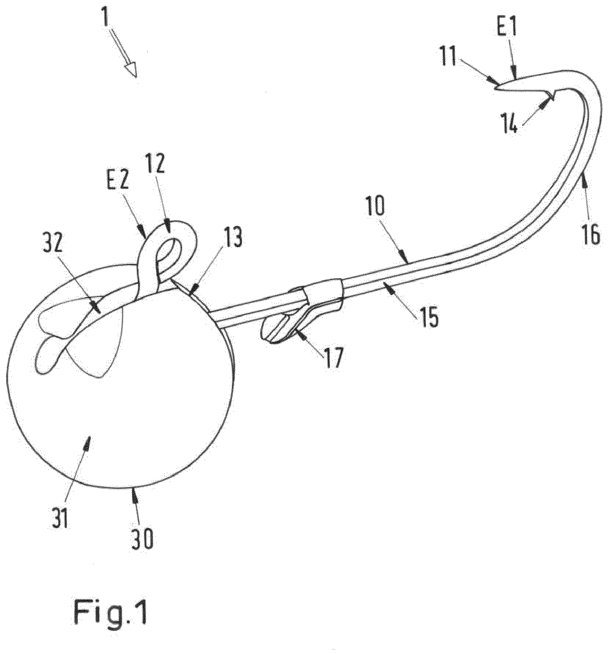

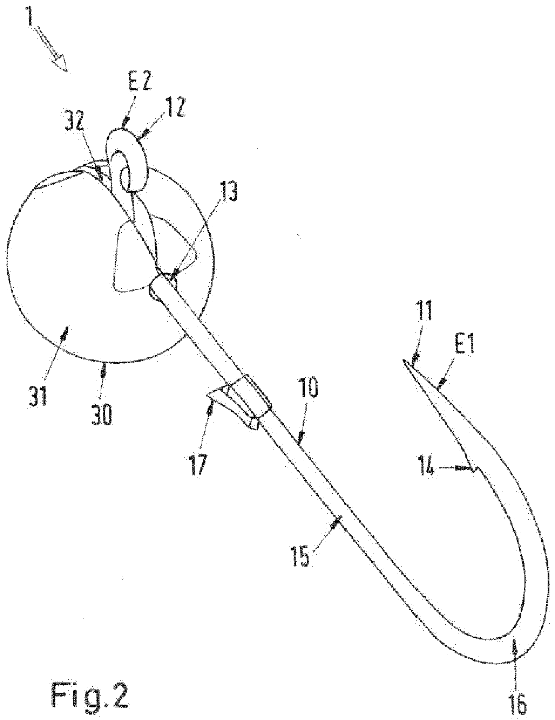

In den **Fig. 1** **und** **2** wird ein Angelhaken 1 aus zwei unterschiedlichen perspektivischen Ansichten gezeigt. Gleiche Bezugsziffern kennzeichnen also gleiche Merkmale und die Fig. 1 und 2 werden zusammen beschrieben.

Der Angelhaken 1 weist ein gebogenes Hakenelement 10 aus Eisen oder Stahl auf, das an einem ersten Ende E1 eine Spitze 11 mit einem Widerhaken 14 und im Bereich eines dem ersten Ende E1 gegenüberliegenden zweiten Endes E2 einen Hakenkopf 12 in Form einer Befestigungsöse aufweist. Die Befestigungsöse ist durch ein Umbiegen des ersten Endes E1 des gebogenen Hakenelements 10 hergestellt. An das erste Ende E1 schließt sich ein Hakenbogen 16 an, an welchen sich wiederum ein Hakenschenkel 15 anschließt, der sich bis zum Hakenkopf 12 erstreckt. Dieses gebogene Hakenelement 10 ist einteilig ausgebildet.

Außerdem weist der Angelhaken 1 ein kugelförmiges Gewichtselement 30 auf, das aus einem Metallkörper 31 besteht, insbesondere aus Eisen, Stahl, Edelstahl, Kupfer oder Messing. In dem Metallkörper 31 ist ein linearer Schlitz 32 ausgebildet und das gebogenen Hakenelement 10 ist mit einem Halteabschnitt 13 in dem Schlitz 32 angeordnet und klemmend gehalten. Der Halteabschnitt 13 ist ein Teil des Hakenschenkels 15 im Bereich des zweiten Endes E2. Der Schlitz 32 lässt sich durch Zerspanen herstellen, oder aber er wird beispielsweise durch Fließpressen erzeugt.

Der Halteabschnitt 13 weist im Bereich des Schlitzes 32 einen 90 Grad-Knick auf, der innerhalb des Schlitzes 32 angeordnet ist. Die beiden an den Halteabschnitt 13 angrenzenden Abschnitte des gebogenen Hakenelements 10 sind hierdurch rechtwinklig zueinander ausgerichtet. Der Hakenkopf 12 liegt außerhalb des Schlitzes 32.

Erkennbar ist der Schlitz 32 durch Verformung des Metallkörpers 31 so verformt, dass der Metallkörper 31 auf das gebogene Hakenelement 10 aufgeklemmt ist. Dabei ist der Schlitz 32 so verformt, dass sich gegenüberliege Wandungen des Schlitzes 32 auf beiden Seiten des Hakenkopfes 12 kontaktieren und der Halteabschnitt 13 hierdurch um 360 Grad umfasst ist.

Optional kann das gebogenen Hakenelement 10 durch Verformung des Metallkörpers 31 im Bereich des Halteabschnitts 13 (geringfügig) flachgedrückt sein, dies vorzugsweise so, dass zwischen dem Metallkörper 31 und dem gebogenen Hakenelement 10 eine Rutschsicherung ausgebildet ist.

Der Angelhaken 1 ist vorliegend dreiteilig ausgebildet, indem er aus dem gebogenen Hakenelement 10, dem Metallkörper 31 sowie einem weiteren Widerhaken 17 besteht. Der weitere Widerhaken 17 ist durch ein separates Element ausgebildet, das auf dem Hakenschenkel 15 aufgeklemmt und/oder geklebt ist.

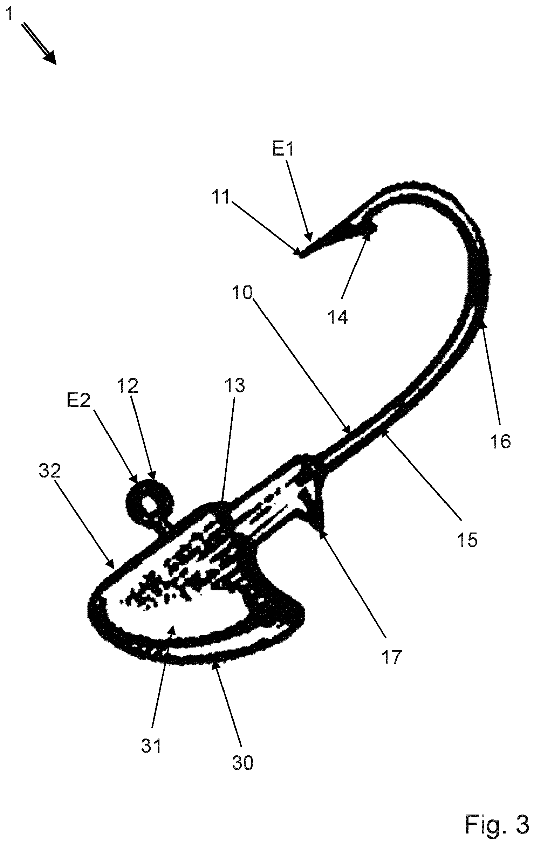

Der Angelhaken 1 nach **Fig. 3** entspricht mit folgenden Ausnahmen demjenigen nach den Figuren 1 und 2, weswegen zunächst auf die vorstehende Beschreibung verwiesen wird. Die zwei wesentlichen Unterschiede liegen in der Form des Metallkörpers 31 und der integralen Ausbildung des Widerhakens 17 mit dem Metallkörper 31. So ist der Metallkörper 31 anstatt kugelförmig gemäß Fig. 3 in der Form eines Erie-Jig-Kopfes ausgebildet. Dieser bildet mit der gekrümmten Aufstandsfläche eine Schaukel in der Art eines Schaukelstuhls für das Hakenelement 10. Zusätzlich ist vom Metallkörper 31 entlang dem Hakenschaft 15 ein Hakenschenkel einteilig ausgebildet, das den Widerhaken 17 für den Köder ausbildet. Im Ergebnis ist der Angelhaken 1 Fig. 3 damit zweiteilig ausgebildet, anstatt wie die Ausführung mit separatem Widerhaken 17 nach den Fig. 1 und 2 dreiteilig.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| 1 | Angelhaken | | |
| | | 30 | Gewichtselement |
| 10 | gebogenes Hakenelement | 31 | Metallkörper |
| 11 | Spitze | 32 | Schlitz |
| 12 | Hakenkopf | | |
| 13 | Halteabschnitt | E1 | erstes Ende |
| 14 | Widerhaken | E2 | zweites Ende |
| 15 | Hakenschenkel | | |
| 16 | Hakenbogen | | |
| 17 | Widerhaken | | |

## Patentansprüche

1. **Angelhaken** (1) mit einem gebogenen Hakenelement (10), das an einem ersten Ende (E1) eine Spitze (11) und im Bereich des zweiten Endes (E2) einen Hakenkopf (12) aufweist, und mit einem Gewichtselement (30), **dadurch gekennzeichnet, dass** das Gewichtselement (30) aus einem Metallkörper (31) mit einem Schlitz (32) ausgebildet ist, wobei das gebogenen Hakenelement (10) mit einem Halteabschnitt (13) in dem Schlitz (32) angeordnet und klemmend gehalten ist.

2. Angelhaken (1) nach Anspruch 1, **dadurch gekennzeichnet, dass** dieser zweiteilig ausgeführt ist, nämlich aus dem gebogenen Hakenelement (10) und dem Metallkörper (31) besteht.

3. Angelhaken (1) nach einem der Ansprüche 1 oder 2, **dadurch gekennzeichnet, dass** das gebogene Hakenelement (10) einteilig ausgebildet ist.

4. Angelhaken (1) nach einem der vorhergehenden Ansprüche, **dadurch gekennzeichnet, dass** das gebogene Hakenelement (10) im Bereich des Schlitzes (32) einen Knick aufweist.

5. Angelhaken (1) nach einem der vorhergehenden Ansprüche, **dadurch gekennzeichnet, dass** der Schlitz (32) linear ausgebildet ist.

6. Angelhaken (1) nach einem der vorhergehenden Ansprüche, **dadurch gekennzeichnet, dass** die beiden an den Halteabschnitt (13) angrenzenden Abschnitte des gebogenen Hakenelements (10) rechtwinklig zueinander ausgerichtet sind.

7. Angelhaken (1) nach einem der vorhergehenden Ansprüche, **dadurch gekennzeichnet, dass** der Schlitz (32) durch Verformung des Metallkörpers (31) so verformt ist, dass der Metallkörper (31) auf das gebogene Hakenelement (10) aufgeklemmt ist.

8. Angelhaken (1) nach einem der vorhergehenden Ansprüche, **dadurch gekennzeichnet, dass** der Schlitz (32) durch Verformung des Metallkörpers (31) so verformt ist, dass sich gegenüberliege Wandungen des Schlitzes (32) wenigstens in einem Bereich kontaktieren und der Halteabschnitt (13) hierdurch umfasst ist.

9. Angelhaken (1) nach einem der vorhergehenden Ansprüche, **dadurch gekennzeichnet, dass** das gebogenen Hakenelement (10) durch Verformung des Metallkörpers (31) im Bereich des Halteabschnitts (13) flachgedrückt ist.

10. Angelhaken (1) nach einem der vorhergehenden Ansprüche, **dadurch gekennzeichnet, dass** der Metallkörper (31) kugelförmig ausgebildet ist.

11. Angelhaken (1) nach einem der vorhergehenden Ansprüche, **dadurch gekennzeichnet, dass** der Metallkörper (31) durch ein Folgeverbundverfahren um den Halteabschnitt (13) geformt ist.

12. Angelhaken (1) nach einem der vorhergehenden Ansprüche, **dadurch gekennzeichnet, dass** der Metallkörper (31) aus Eisen oder Stahl besteht.

13. **Verfahren** zur Herstellung eines Angelhakens (1) umfassend die folgenden Schritte:
a) Bereitstellen eines gebogenen Hakenelements (10), das an einem ersten Ende (E1) eine Spitze (11) und im Bereich des zweiten Endes (E2) einen Hakenkopf (12) aufweist;
b) Bereitstellen eines Gewichtselements (30), das aus einem Metallkörper (31) ausgebildet ist;
c) Umformen des Metallkörpers (31) derart, dass das gebogenen Hakenelement (10) mit einem Halteabschnitt (13) so in einem Schlitz (32) des Metallkörpers (31) sitzt, dass das Gewichtselement (30) klemmend auf dem Halteabschnitt (13) des gebogenen Hakenelements (10) gehalten ist.

14. Verfahren nach Anspruch 13, **dadurch gekennzeichnet, dass**
b1) das Bereitstellen des Gewichtselements (30) gemäß Schritt b), durch einen Metallkörper (31) mit einem Schlitz (32) erfolgt, und das gebogene Hakenelement (10) mit einem Halteabschnitt (13) in dem Schlitz (32) angeordnet wird.

15. Verfahren nach einem der Ansprüche 13 und 14, **dadurch gekennzeichnet, dass** das Gewichtselement (30) gemäß Schritt b), vorzugsweise inklusive dem Schlitz, durch ein Fließpressverfahren aus einem gewickelten Rohmaterial bereitgestellt und Schritt c) durch ein Folgeverbundverfahren erfolgt.
